# EUROPÄISCHE PATENTSCHRIFT

(11) **EP 1 458 261 B1**
(45) Veröffentlichungstag und Bekanntmachung des Hinweises auf die Patenterteilung: **02.08.2006**
(21) Anmeldenummer: 02782626.2
(22) Anmeldetag: 20.12.2002
(51) Int. Cl.: A46B 9/06, A46B 15/00

(54) **ZAHNBÜRSTE UND VERFAHREN ZUR HERSTELLUNG EINER SOLCHEN ZAHNBÜRSTE**
TOOTHBRUSH AND METHOD FOR PRODUCTION OF SUCH A TOOTHBRUSH
BROSSE A DENTS ET PROCEDE DE FABRICATION

(30) Priorität: 28.12.2001 DE 10164336
(43) Veröffentlichungstag der Anmeldung: 22.09.2004
(60) Teilanmeldung: 06002599.6
(73) Patentinhaber: Trisa Holding AG, 6234 Triengen (CH)
(72) Erfinder: FISCHER, Franz, CH-6234 Triengen (CH); STRÄHLER, Reto, CH-6034 Adligenswil (CH)
(74) Vertreter: Schaad, Balass, Menzl & Partner AG
(86) Internationale Anmeldenummer: PCT/CH2002/000717
(87) Internationale Veröffentlichungsnummer: WO 2003/055351

(56) Entgegenhaltungen:
- WO-A-00/76369
- WO-A-02/11583
- US-A- 2 042 239
- US-A- 2 129 082
- US-A- 2 139 245

## Beschreibung

Die Erfindung betrifft eine Zahnbürste gemäss dem Oberbegriff von Anspruch 1 wie aus der US 2 129 082 A bekannt ist und ein Verfahren zu deren Herstellung mit den Merkmalen von Anspruch 15.

Zahnbürsten mit einem konventionellen Borstenfeld bestehend aus Bündeln von Borstenfilamenten, z.B. aus Polyamid (PA) oder Polyester (PBT), und einer zusätzlichen weichelastischen Struktur sind zum Beispiel aus der WO 00/64307 und der WO 01/21036 bekannt. Die konventionellen Borsten dienen dabei zur gewöhnlichen Reinigung der Zähne, während die weichelastische Struktur unterschiedliche Funktionen erfüllen kann, z.B. Massage des Gaumens, Dämpfung der Putzbewegung, Entfernung von Zahnbelägen, Polieren der Zahnoberfläche, elastische Aufhängung der Borsten und/oder Abdichten ungeschweisster Stellen. Die WO 00/64307 offenbart eine Zahnbürste mit stabförmigen weichelastischen Reinigungselementen, die etwa dieselbe Länge wie die konventionellen Borstenbündel haben und peripher am Kopfteil der Zahnbürste angeordnet sind. Bei der WO 01/21036 sind elastische Reinigungselemente flächig, z.B. wellenförmig gestaltet, und innerhalb des konventionellen Borstenfelds angeordnet. Bei der WO 00/64307 sind mehrere der weichelastischen Reinigungselemente über eine Materialbrücke aus demselben Material miteinander verbunden. Die Reinigungselemente werden nach dem Beborsten des Kopfteils der Zahnbürste mit konventionellen Borsten durch Umspritzen des Kopfteils hergestellt. Nachteilig hieran ist, dass die Borstenfilamente vor der Herstellung der weichelastischen Struktur gebrauchsfertig gemacht werden müssen, z.B. durch Abrunden der Borstenbündel oder Herstellen einer vorbestimmten Profilierung. Anschliessend ist ein erneutes Einsetzen in das Spritzgiesswerkzeug zur Herstellung der weichelastischen Struktur notwendig. Dabei können die Borstenbündel beschädigt oder verschmutzt werden. Die herstellbaren Formen der weichelastischen Struktur sind unter anderem aus entformungstechnischen Gründen beschränkt.

Der Erfindung liegt die Aufgabe zugrunde, eine Zahnbürste mit konventionellen Borsten und einer weichelastischen Struktur zur Verfügung zu stellen, die auf einfache Weise herstellbar ist. Des weiteren soll ein entsprechendes Herstellungsverfahren angegeben werden.

Die Aufgabe wird gelöst durch eine Zahnbürste mit den Merkmalen von Anspruch 1 sowie durch ein Verfahren zur Herstellung einer solchen Zahnbürste mit den Merkmalen von Anspruch 15. Vorteilhafte Weiterbildungen ergeben sich aus den abhängigen Ansprüchen, der Beschreibung und den Zeichnungen.

Erfindungsgemäss ist bei einer Zahnbürste der eingangs genannten Art wenigstens eine weichelastische Struktur, z.B ein Reinigungselement, an einem Trägerelement angeordnet, das aus einem Hartmaterial besteht. Dieses Trägerelement ist mit dem Kopfteil verbunden. Eine solche Zahnbürste hat Vorteile bei der Herstellung, da das Zusatzteil, d.h. das mit der weichelastischen Struktur versehene Trägerelement, separat hergestellt und auf einfache Weise mit dem Kopfteil verbunden werden kann.

Die Verbindung des Trägerelements mit dem Kopfteil kann auf mechanischem Wege durch Verklemmen oder Verschnappen oder Nieten, chemisch durch Kleben, durch Ultraschallschweissen oder thermisch durch Schweissen oder sonstige Wärmezufuhren hergestellt werden. Herstellungstechnisch bevorzugt ist, dass das Trägerelement aus demselben Material wie das Kopfteil besteht, da in diesem Fall nur eine Hartkomponente zur Herstellung der Bürste bereitgehalten und nicht auf gegenseitige Materialverträglichkeit geachtet werden muss. Dies hat insbesondere beim Ultraschallschweissen Vorteile.

Die Anordnung der weichelastischen Struktur an einem aus einem Hartmaterial bestehenden Trägerelement hat folgende Vorteile: Das Zusatzteil kann separat vom übrigen Zahnbürstenkörper, bestehend aus Handgriff und Kopfteil, gefertigt und für den Endgebrauch vorbereitet werden. In einem einfachen weiteren Schritt erfolgt die Verbindung des Trägerelements mit dem Kopfteil, wobei sämtliche der genannten Verbindungstechniken verwendet werden können und das harte Trägerelement vorzugsweise daran angepasst geformt ist. Das Trägerelement kann beispielsweise so geformt werden, dass es im späteren Verbindungsschritt das Kopfteil in klemmender Weise umgreift. Das Zusatzteil ist aufgrund des harten Trägerelements auf einfache Weise zu handhaben und kann deutlich leichter gegriffen werden als ein vollständig aus einem weichelastischen Material hergestelltes Zusatzteil.

Das Zusatzteil ist im Verhältnis zur übrigen Zahnbürste klein. Daher sind auch die benötigten Werkzeuge klein und kostengünstig. Der Zahnbürstengrundkörper und die Beborstung kann auch bei späterer Ausstattung mit unterschiedlichen Zusatzteilen mit einem Standardwerkzeug hergestellt werden. Um Zahnbürsten mit unterschiedlichen Zusatzteilen herzustellen, muss lediglich das Zusatzteil bzw. das entsprechende Werkzeug dafür ausgetauscht werden, was auf einfache und kostengünstige Weise geschehen kann.

Ein weiterer Vorteil der separaten Herstellung von Zusatzteil und Grundkörper ist, dass beliebige Formen von weichelastischen Reinigungselementen realisiert werden können, z.B. auch solche, die die konventionellen Borsten kreuzen, berühren oder beim Einsetzen des Zusatzteils verdrängen. Durch die separate Herstellung ist die Entformung der weichelastischen Struktur unproblematisch. Es sind Geometrien im Spritzgiessverfahren herstellbar, die nur unter grossem Aufwand entformbar wären, wenn das Reinigungslement direkt auf dem beborsteten Kopfteil angebracht würde.

Bisher wurde die weichelastische Strukturaus herstellungstechnischen Gründen aus demselben Material wie etwaige weichelastische Komponenten am Griffteil hergestellt. Durch die Erfindung ergibt sich für das Material der Struktur eine grössere Freiheit, so dass beispielsweise ein anderer Härtegrad verwendet werden kann.

Durch eine unlösbare Verbindung des Zusatzteils mit dem Kopfteil wird verhindert, dass sich das Zusatzteil während des Gebrauchs ablöst, und die Verschluckungsgefahr ausgeschlossen.

Die konventionellen Borsten sind beispielsweise direkt am Kopfteil, an einer als weiteres Trägerelement wirkenden Borstenplatte oder auch am Trägerelement für die weichelastischen Reinigungselemente befestigt, wobei alle Varianten Vorteile aufweisen. Bei der Befestigung der Borsten am Kopfteil bzw. an der Borstenplatte können die weichelastische Struktur und die konventionellen Borsten vor dem Zusammensetzen von Kopfteil und Zusatzteil unabhängig voneinander für den späteren Gebrauch vorbereitet werden, so dass ein gegenseitiges Beschädigen oder Verschmutzen verhindert wird.

Das Anbringen von sowohl konventionellen Borsten als auch der weichelastischen Struktur' am Trägerelement hat den Vorteil, dass eine beliebige räumliche Anordnung der beiden Komponenten möglich ist. Ein solches vorbereitetes Trägerelement kann zur Endfertigung mit verschiedenen Zahnbürstengrundkörpern verbunden werden, so dass mit wenigen Grundkörpern eine grosse Anzahl verschiedener Zahnbürsten realisierbar ist.

Die konventionellen Borsten können in beiden Fällen vor oder nach dem Anbringen der weichelastischen Struktur für den Gebrauch vorbereitet werden. Sind beide Komponenten am Trägerelement vorgesehen, wird bevorzugt zuerst die weichelastische Struktur, einschliesslich etwaiger Reinigungselemente, angeformt und das Trägerelement anschliessend mit Borsten besetzt, welche beispielsweise durch Aussparungen in der weichen oder harten Komponente hindurchgeführt sein können.

Die Herstellung des Zusatzteils, d.h. des Trägerelements mit einem oder mehreren weichelastischen Reinigungselementen, erfolgt bevorzugt im Zwei- oder Mehrkomponentenspritzgiessverfahren. Dabei wird vorzugsweise eine unlösbare Verbindung zwischen den Komponenten hergestellt.

Die weichelastische Struktur ist bevorzugt auch seitlich am Trägerelement angeordnet, z.B. angespritzt, wobei sie im montierten Zustand seitlich mit der Aussenkontur des Kopfteils abschliesst oder über diese hinausgeht. Sie dient z.B. zum Abdichten ungeschweisster Stellen, zum Massieren des Gaumens, z.B. durch angespitzte leicht abstehende elastische Elemente, oder als Aufprallschutz beim Putzen.

Vorzugsweise besteht das weichelastische Reinigungselement aus einem insbesondere thermoplastischen Elastomer, z.B. aus natürlichem oder synthetischem Gummi. Für das Trägerelement wird bevorzugt das für den Zahnbürstengrundkörper eingesetzte Material verwendet, insbesondere Polypropylen, Styrol-Acryl-Nitril, Polyester, Acryl-Nitril-Butadienstyrol (ABS) oder Isoplast®. Die Shore A Härte der weichen Komponente ist vorzugsweise geringer als 90 und liegt besonders bevorzugt unter 50.

Besonders bevorzugt wird das Trägerelement gemäss der AFT (Anker Free Tufting) Technologie mit Borsten besetzt. Dabei wird zunächst die Trägerplatte aus einem Hartmaterial mit der weichelastischen Struktur hergestellt, insbesondere im Zweikomponenten-Spritzgussverfahren. Anschliessend werden die Borstenfilamente durch Aussparungen in der Trägerplatte und/oder in der weichelastischen Struktur hindurchgeführt und zur Befestigung an der Trägerplatte bzw. der weichelastischen Struktur mit ihren im Anwendungsfall dem Bürstenkopf zugewandten rückwärtigen Enden verschweisst oder verklebt. Dies hat den Vorteil, dass sich weitgehend beliebige Borstenanordnungen, insbesondere auch flächige Borstengebilde, realisieren lassen. Das Trägerelement wird insbesondere mittels Ultraschallschweissen mit dem Kopfteil verbunden, z.B. wie in der DE 200 06 311 U beschrieben.

Da sich gummielastisches Material, insbesondere ein thermoplastisches Elastomer, aufgrund der starken Dämpfung der Ultraschallschwingungen nur bedingt Ultraschall verschweissen lässt, wird die Schweissfläche zwischen Trägerelement und Kopfteil bevorzugt zumindest teilweise von der weichelastischen Komponente freigehalten. Vorzugsweise wird dazu der Anspritzpunkt der Weichkomponente an der borstentragenden Seite des Trägerelements gewählt, damit keine Materialbrücken aus der Weichkomponente die Schweissfläche verkleinern. Für den Fall, dass dennoch im Bereich der Schweissfläche weichelastische Elemente angeordnet werden sollen, wird deren Lage vorzugsweise seitlich von der Längsachse der Zahnbürste gewählt. Damit entstehen unverschweisste Stellen ebenfalls seitlich am Trägerelement, während der in Längsrichtung vordere und hintere Bereich zwischen Trägerelement und Kopfteil verschweisst werden kann. Somit ist ein guter Halt des Trägerelements gewährleistet, da durch die Putzbewegung und die entsprechenden Hebelkräfte vor allem der vordere bzw. hintere Bereich und weniger die Seitenbereiche belastet werden. Eine nur punktuelle Verschweissung mit ungeschweissten Stellen kann auch gezielt eingesetzt werden, damit Bürstenkopf und Trägerelement gegeneinander beweglich sind und so eine gewisse Flexibilität des gesamten Bürstenkopfes erreicht wird .

Die weichelastische Struktur kann nach Art einer Dichtlippe auch zum zusätzlichen Abdichten ungeschweisster Stellen dienen. Dadurch wird vorteilhaft der Raum zwischen dem Trägerelement und dem Kopfteil gegen das Eindringen von Wasser abgedichtet. Somit können sich in diesem Bereich keine Keime ansammeln, und die Bürste ist hygienischer. Um eine angemessene Dichtfunktion zu erreichen, ist die Shore A Härte der Weichkomponente vorzugsweise geringer als 50.

Beispiele für die Erfindung sind in den Zeichnungen dargestellt und nachfolgend beschrieben. Es zeigen rein schematisch:
- Fig. 1a-d: Ansichten einer erfindungsgemässen Zahnbürste in verschiedenen Montagestadien, wobei das Zusatzteil durch Nieten am Kopfteil befestigt wird;
- Fig. 2a-e: Ansichten einer weiteren Zahnbürste, deren Zusatzteil durch Nieten befestigt wird;
- Fig. 3a-e: Ansichten einer Zahnbürste, deren Zusatzteil durch Schweissen befestigt wird;
- Fig. 4a-e: Ansichten einer Zahnbürste, deren Zusatzteil mittels einer Schnappverbindung befestigt wird;
- Fig. 5a-e: Ansichten einer weiteren Zahnbürste, deren Zusatzteil durch eine Schnappverbindung befestigt wird;
- Fig. 6a-f: Ansichten einer Zahnbürste, bei der das Zusatzteil in klemmender Weise befestigt wird;
- Fig. 7a-e: die Herstellung einer Zahnbürste im AFT Verfahren;
- Fig. 8a-e: Ansichten einer weiteren Zahnbürste, deren Zusatzteil durch eine Schnappverbindung befestigt wird;
- Fig. 9a-f: Ansichten einer weiteren Zahnbürste, deren Zusatzteil mit Spiel am Kopfteil befestigt ist;
- Fig. 10a-j: die Herstellung einer weiteren Zahnbürste im AFT Verfahren;
- Fig. 11a-c: Ansichten einer Zahnbürste mit einer seitlichen Umrandung aus weichelastischem Material.

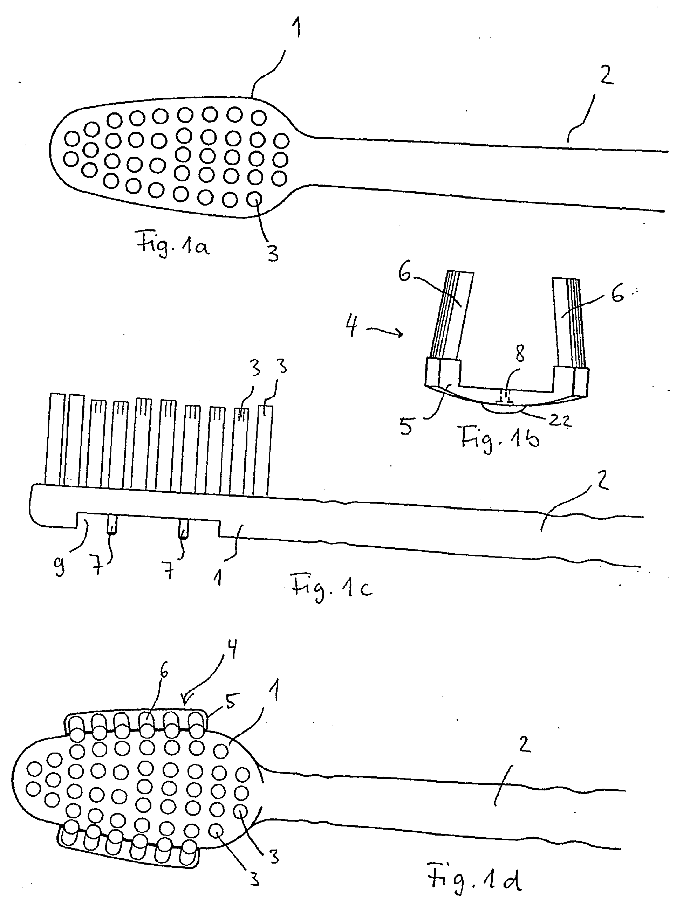

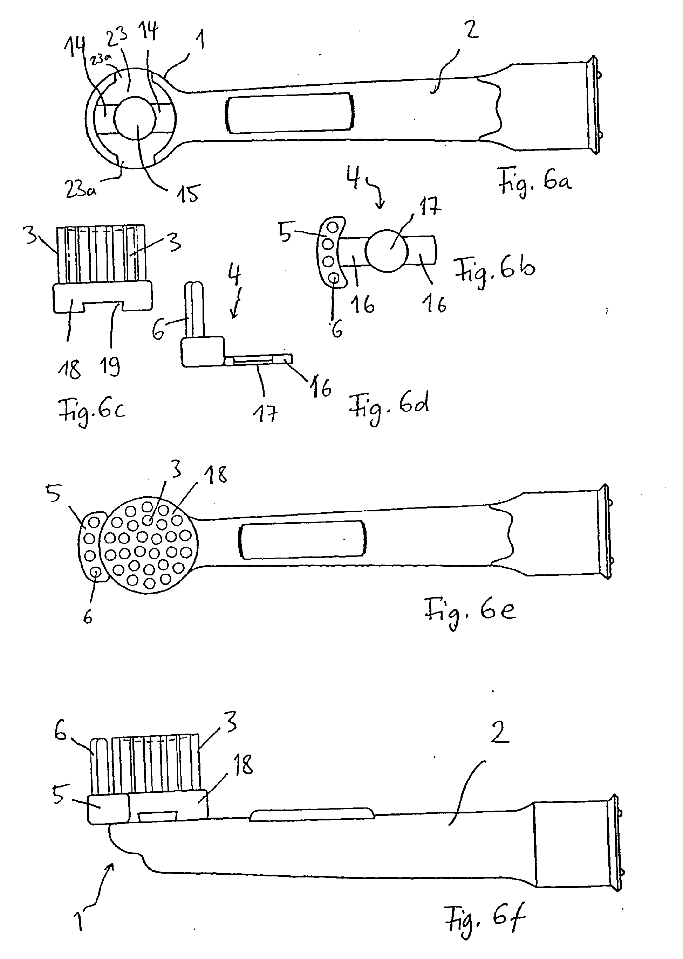

Alle dargestellten Zahnbürsten haben einen Grundkörper mit einem Kopfteil 1 und einem Griffteil 2, der nur teilweise dargestellt ist. Ein Zusatzteil 4 mit mehreren weichelastischen Reinigungselementen 6 unterschiedlicher Form, die mit einem Trägerelement ebenfalls unterschiedlicher Form verbunden sind, ist bei der fertigen Zahnbürste mit dem Kopfteil 1 verbunden. Das Kopfteil 1 ist des weiteren direkt (Fig. 1 - 5) bzw. indirekt (Fig. 6) mit Bündeln 3 aus konventionellen Borstenfilamenten versehen. Material und Anordnung der Borstenbündel 3 kann unterschiedlich sein. Im Folgenden wird nur auf die Besonderheiten der einzelnen Ausführungsbeispiele eingegangen. Dabei sind einander entsprechende Elemente mit gleichen Bezugszeichen bezeichnet.

Fig. 1a,c zeigt eine Zahnbürste, deren Kopfteil 1 bereits mit Borstenbündeln 3 versehen wurde. Das in Fig. 1b dargestellte Zusatzteil 4 hat ein im Schnitt U-förmiges Trägerelement 5 aus einem Hartmaterial, insbesondere demselben Kunststoff, der zur Herstellung des Kopfteils 1 bzw. des gesamten Grundkörpers verwendet wurde. Mit dem Trägerelement 5 sind weichelastische Reinigungselemente 6, hier in Form von geraden Stäben, fest verbunden. Die Reinigungselemente 6 sind leicht aus der Vertikalen aufeinander zu geneigt und schliessen mit der Vertikalen einen Winkel von 5 bis 30° ein. Auf diese Weise berühren die elastischen Reinigungselemente 6 die konventionellen Borstenbündel 3 (Fig. 1d) und können diese sogar kreuzen (nicht dargestellt). Eine derartige Stellung ist mit konventionellen Herstellungsverfahren nur mit aufwendigen Verdrängungstechniken realisierbar.

Das Trägerelement 5 ist in seiner Form an eine in Fig. 1c sichtbare Aussparung 9 im den Borstenbündeln 3 abgewandten Bereich des Kopfteils 1 angepasst. In diesem Bereich befinden sich des weiteren Stifte 7, die durch ein Loch 8 im Trägerelement 5 hindurchgesteckt werden können. Die Stifte 7 werden kalt oder warm verformt und so im Loch 8 dauerhaft fixiert. Eine Aufsicht auf die fertiggestellte Zahnbürste zeigt Fig. 1d.

Der untere Bereich des Lochs 8 oder des gesamten Kopfteils 1 kann aus ästhetischen oder hygienischen Gründen durch eine Schutzschicht 22 aus weichem Kunststoff abgedeckt werden (vgl. Fig. 2d). Ebenso werden die Grenzbereiche zwischen dem Trägerelement 5 und dem Kopfteil 1 vorzugsweise durch weichen Kunststoff abgedeckt. Als Material hierfür wird beispielsweise das Weichmaterial verwendet, das auch für den Griffbereich der Zahnbürste verwendet wird. Vorzugsweise wird die Schutzschicht bereits während der Herstellung des Griffteils im Mehrkomponentenspritzgiessverfahren angespritzt. Die Kunststoffschicht kann jedoch auch direkt an das Trägerelement angeformt sein.

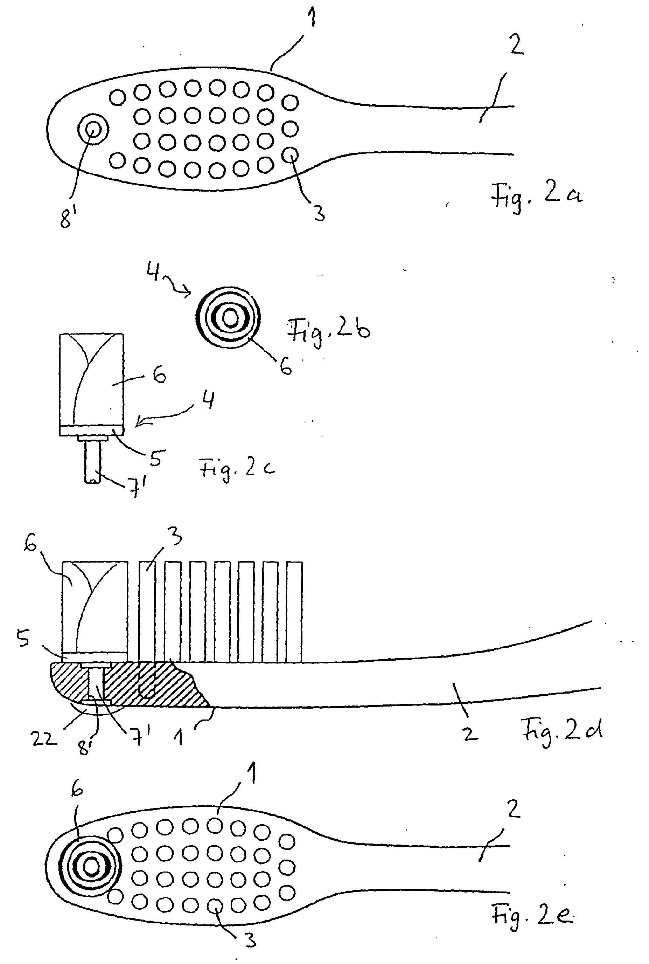

Ein weiteres Beispiel für eine Zahnbürste, deren Zusatzteil 4 durch eine Nietverbindung mit dem Kopfteil 1 verbunden wird, ist in Fig. 2a-e dargestellt. Das Zusatzteil besteht hier aus einem tellerförmigen Trägerelement 5, mit dem flächige weichelastische Reinigungselemente 6 rosettenförmig verbunden sind. Das Trägerelement 5 weist einen Stift 7' auf, mit dem das Zusatzteil 4 durch ein entsprechend vorbereitetes Loch 8' im vorderen Ende des Kopfteils durchgesteckt und durch Verformen des Stiftes 7' fixiert werden kann. Die weichelastischen Reinigungselemente 6 befinden sich im Bereich der Spitze des Kopfteils 1. In Richtung des Griffteils 2 schliesst sich das Borstenfeld mit einzelnen Borstenbündeln 3 an. Eine Schutzschicht 22 deckt den Bereich des Lochs 8' ab.

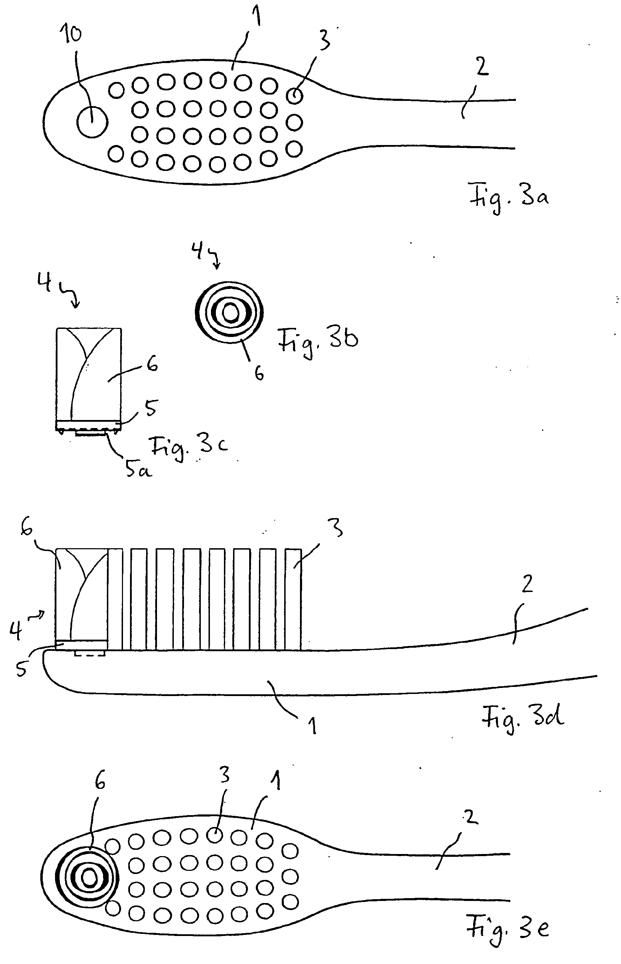

Fig. 3a-e zeigt ein weiteres Beispiel für eine Zahnbürste, die im Ergebnis einer Zahnbürste gemäss Fig. 2 ähnelt. Das Zusatzteil 4 mit einem tellerförmigen Trägerelement 5 und rosettenartigen weichelastischen Reinigungselementen 6 wird vorliegend mittels einer Schweissverbindung mit dem Kopfteil 1 verbunden. Dazu weist der vordere Bereich des Kopfteils eine tellerartige Aussparung auf, in die das Trägerelement 5 dank einer entsprechend strukturierten Unterseite 5a mittels Ultraschallschweissen dauerhaft eingefügt wird. Eine Seitenansicht der fertigen Zahnbürste zeigt Fig. 3d, die Aufsicht auf das kombinierte Borstenfeld aus konventionellen Borstenbündeln 3 und weichelastischen Reinigungselementen 6 zeigt Fig. 3e.

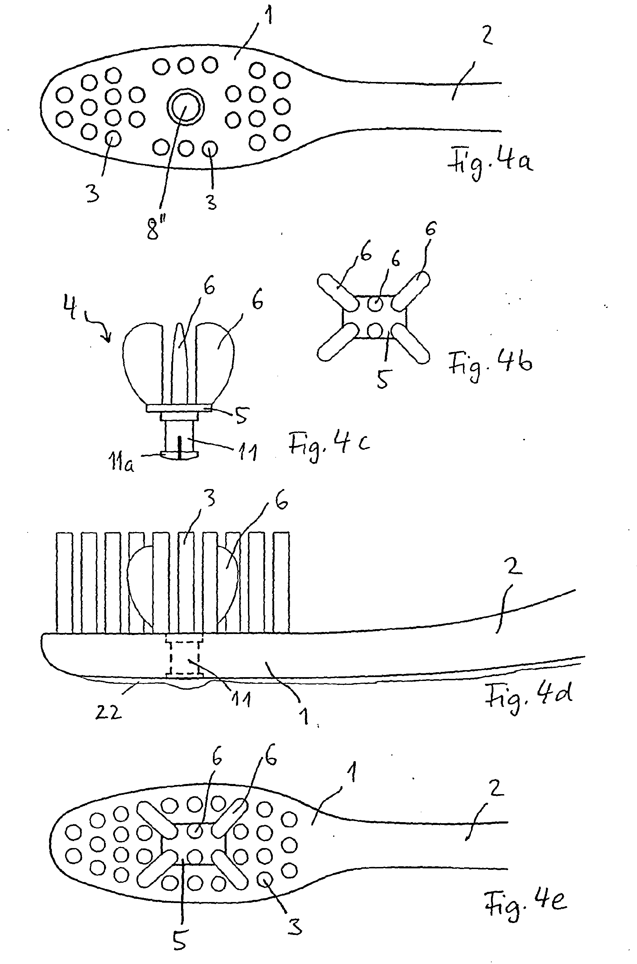

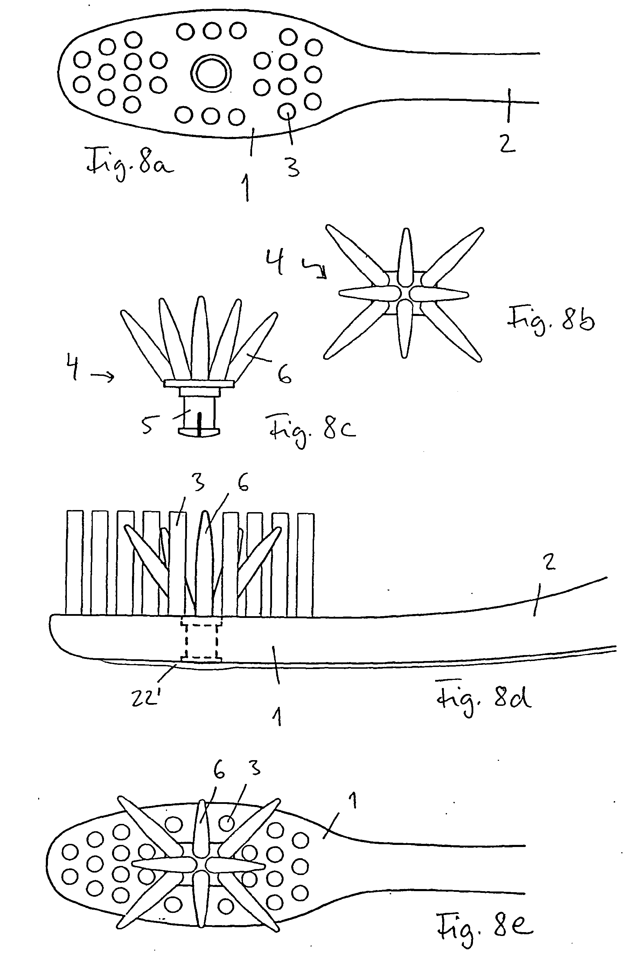

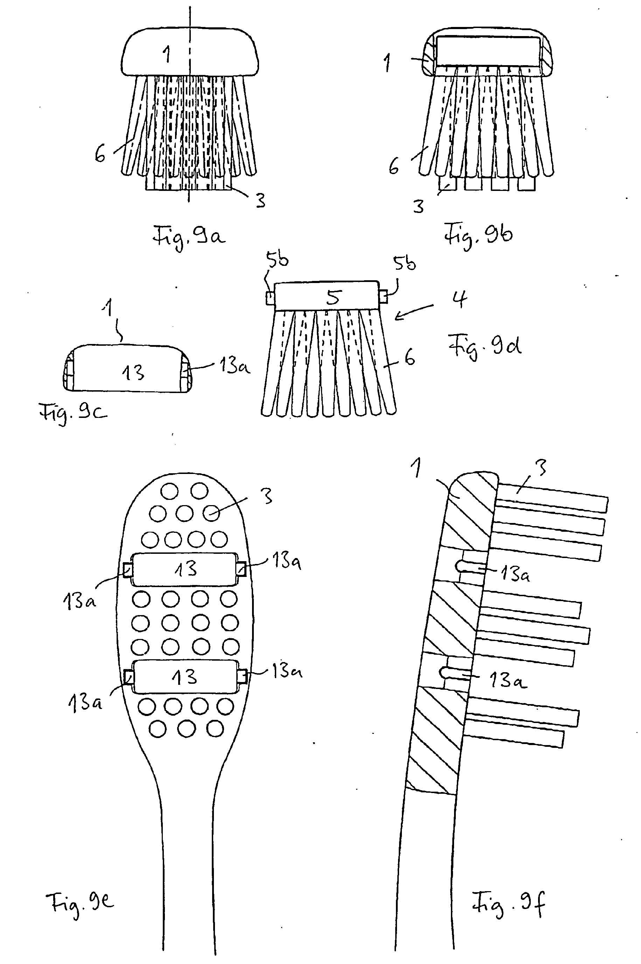

Das Zusatzteil 4 der in Fig. 4a-e dargestellten Zahnbürste ist mittels einer Schnappverbindung in der Mitte des Kopfteils 1 befestigt. Das Zusatzteil 4 umfasst ein rechteckiges Trägerelement 5, an dessen Ecken flügelartige weichelastische Reinigungselemente 6 angeordnet sind. Auf dem Trägerelement 5 befinden sich des weiteren zwei stabförmige Reinigungselemente 6 (Fig. 4b,c). Wie in Fig. 4a dargestellt, weist das Kopfteil 1 ein mittiges Loch 8" auf, das zum Durchstecken eines federnd gestalteten Fortsatzes 11 am Trägerelement 5 dient. Zusatzteil 4 und Kopfteil 1 werden durch eine Schnappverbindung miteinander verbunden, die aufgrund des am unteren Ende 11a des Fortsatzes 11 vergrösserten Querschnitts nicht ohne weiteres lösbar ist. Das Borstenfeld der konventionellen Borstenbündel 3 ist derart konfiguriert, dass die flügelartigen Reinigungselemente 6 zwischen den konventioriellen Borstenbündeln 3 Platz finden, wie in Fig. 4a und 4e dargestellt. Das Zusatzteil 4 wird separat gefertigt und anschliessend in das Kopfteil 1 mit dem vorbereiteten Borstenfeld eingesetzt. Dadurch können auch durch das konventionelle Borstenfeld durchgreifende Strukturen der weichelastischen Reinigungselemente 6 realisiert werden, wie die über Eck angeordneten flügelartigen Elemente aus Fig. 4b-e oder die in verschiedene Raumrichtungen weisenden, aufgefächerten stiftförmigen Reinigungselemente aus Fig. 8. Die Unterseite des Kopfteils 1 ist aus hygienischen oder ästhetischen Gründen durch eine Schicht 22 aus weichelastischem Material abgedeckt.

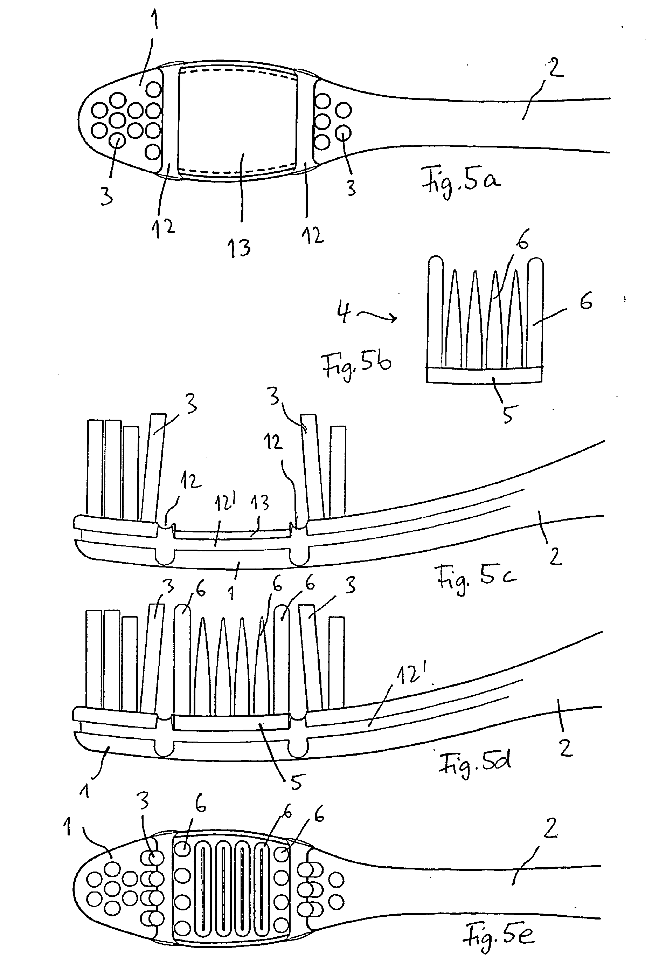

Fig. 5a-e zeigen ein weiteres Beispiel für eine Schnappverbindung zwischen dem Zusatzteil 4 und dem Kopfteil 1 einer erfindungsgemässen Zahnbürste. Das Kopfteil 1 weist innerhalb des Borstenfelds aus konventionellen Borstenbündeln 3 einen vorbereiteten Bereich 13 für die Aufnahme des Zusatzteils 4. Dieser Bereich 13 besteht aus einer Vertiefung, an deren Rand senkrecht zur Ausrichtung des Handgriffs 2 jeweils eine Nut 12 verläuft, die dem Kopfteil 1 wie auch die an seinem seitlichen Rand verlaufenden Nuten 12' eine gewisse Elastizität bzw. federnde Wirkung gibt. Der vorbereitete Bereich 13 ist geringfügig kleiner als die Grundfläche des Trägerelements 5, so dass dieses passend und in klemmender Weise in den Bereich 13 eingesetzt werden kann. Wie aus der Aufsicht in Fig. 5e erkennbar, hat das Zusatzteil sowohl stabförmige als auch flächige, quer zur Ausrichtung des Handgriffs 2 angeordnete Reinigungselemente.

Fig. 6a-f zeigt ein weiteres Beispiel für eine erfindungsgemässe Zahnbürste, hier eine Aufsteckzahnbürste für eine elektrisches Zahnreinigungsgerät. Die konventionellen Borstenbündel 3 sind an einer separaten Borstenplatte 18 befestigt, die im montierten Zustand mit dem daran angepassten Kopfteil 1 der Zahnbürste bzw. einer darauf dreh- oder schwenkbar befestigten Scheibe 23 verbunden ist. Die weichelastischen Reinigungselemente 6, hier stabförmig, sind an einem in der Aufsicht leicht gebogenen Trägerelement 5 befestigt, das einen flächigen Fortsatz 16 aufweist, der im wesentlichen senkrecht zur Ausrichtung der Reinigungselemente 6 orientiert ist. Mit diesem Fortsatz 16 lässt sich das Zusatzteil 4 in eine entsprechend geformte Nut 14 in der Scheibe 23 1 einführen. In der Mitte des Kopfteils 1 und der Nut 14 ist eine runde Aussparung 15 angeordnet, in die eine entsprechendes Gegenelement 17 am Fortsatz 16 des Zusatzteils 4 eingreift. Damit werden Zusatzteil 4 und Kopfteil 1 passend und in klemmender Weise miteinander verbunden. Die Borstenplatte 18 hat an ihrem unteren Ende eine Nut 19 mit der die Borstenplatte 18 an der Scheibe 23 bzw. deren seitlichen Fortsätzen 23 befestigt werden kann. Das Zusatzteil 4 wird in der dargestellten Ausführungsform durch die Scheibe 23 mitbewegt. Als Alternative kann das Zusatzteil 4 direkt am Kopfteil 1 befestigt werden und rotiert nicht mit.

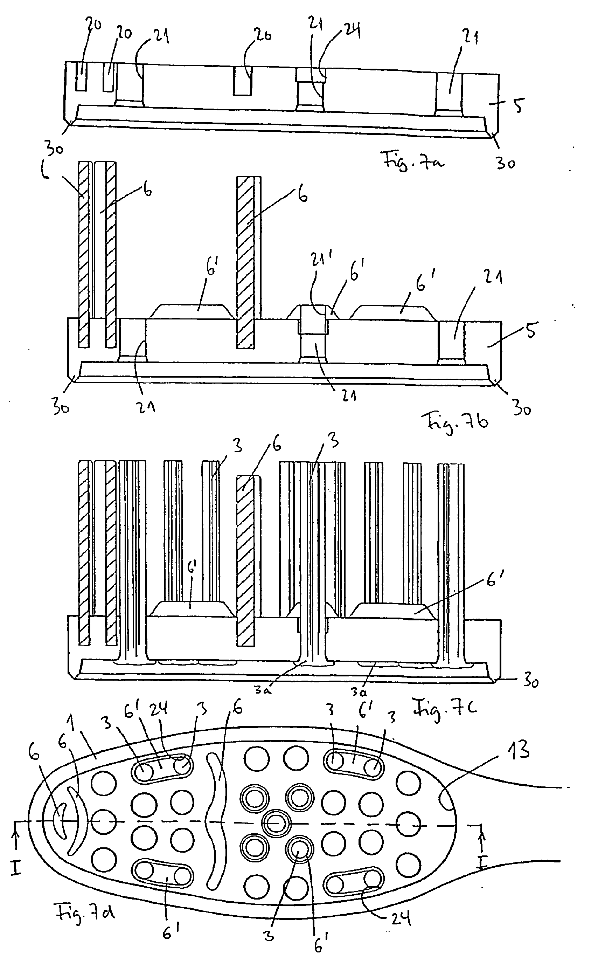

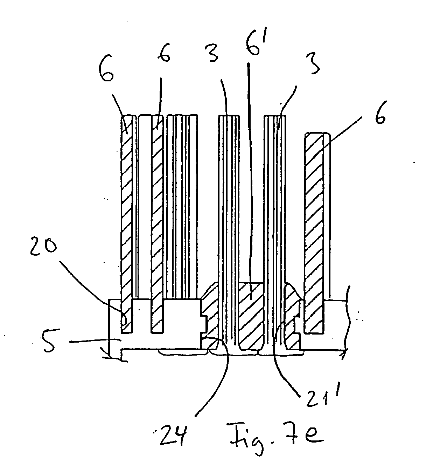

Figur 7a-e zeigen ein Beispiel für die Herstellung einer Zahnbürste mittels der AFT Technologie. Die Figuren 7a-c zeigen Schnittansichten des Trägerelements 5 in verschiedenen Verfahrensstadien, und zwar vor dem Bestücken mit weichelastischen Reinigungselementen 6 und konventionellen Borstenbündeln 3 (Fig. 7a), nach dem Aufbringen des weichelastischen Materials (Fig. 7b) und nach dem Aufbringen der Borsten (Fig. 7c). Das Trägerelement 5 ist in seiner äusseren Form an die Abmessungen eines vorbereiteten Bereichs 13 in Form einer flachen Aussparung im Kopfteil 1 der Zahnbürste angepasst. Das Trägerelement 5 weist vorbereitete Bereiche 20 auf, in die die weichelastischen Reinigungselemente 6 angebracht, insbesondere angespritzt, werden. Des weiteren hat das Trägerelement 5 Aussparungen 24, die ganz oder teilweise mit weichelastischem Material 6' gefüllt werden, vgl. auch die Detailzeichnung Fig. 7e. Des weiteren sind Löcher 21 im Trägerelement 5 vorhanden, durch die Borstenbündel 3 durchgesteckt und an der Rückseite durch Anschmelzen ihrer rückwärtigen Enden 3a befestigt werden. Die elastischen Materialbereiche 6' haben weitere Löcher 21', die ebenfalls zur Aufnahme von Borstenbündeln 3 dienen, welche auf die gleiche Art befestigt werden. Die Materialbereiche 6' können ein oder mehrere Borstenbündel 3 aufnehmen. Die im elastischen Material 6' verankerten Borstenbündel 3 sind daher besonders elastisch verankert bzw. aufgehängt. Weitere Borstenbündel 3 werden direkt auf dem Trägerelement 5 befestigt. Das mit Borstenbündeln und der weichelastischen Struktur 6, 6' bestückte Trägerelement 5 wird anschliessend in den vorbereiteten Bereich 13 eingesetzt.

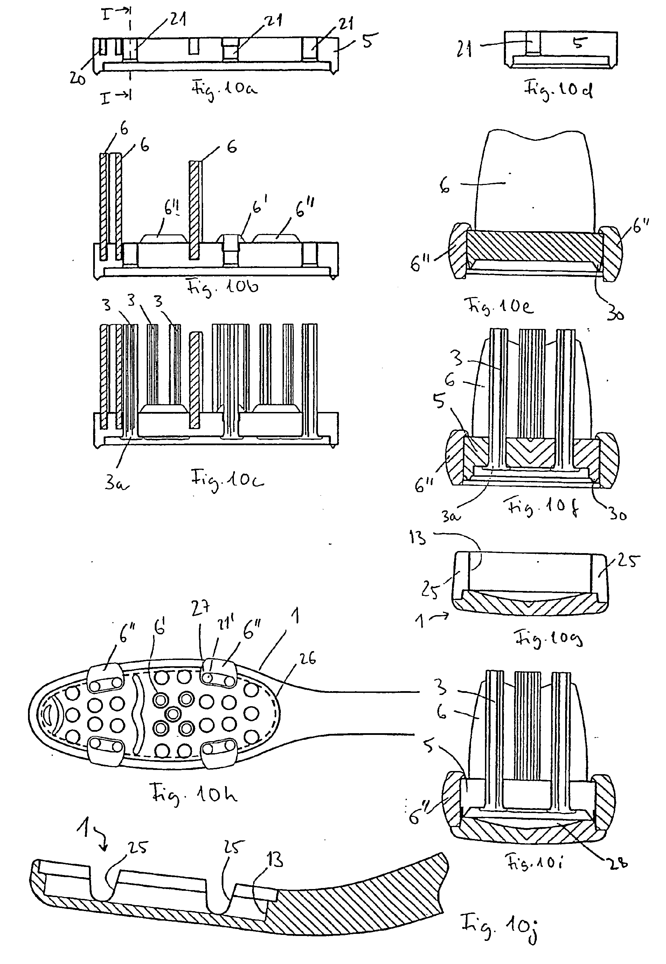

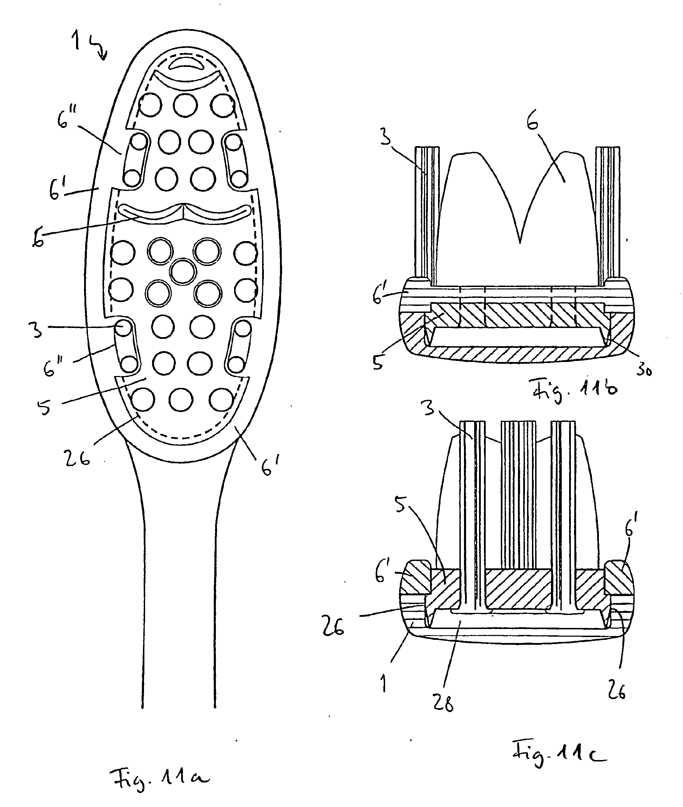

Die im Anwendungsfall dem Boden der Ausnehmung 13 zugewandte Kante 30 des Trägerelements 5 ist spitz gestaltet, ebenso im Beispiel aus Fig. 10 und 11. Diese spitz zulaufende Kante 30 dient beim Ultraschallschweissen zum Verbinden mit dem Kopfteil 1 als Energiekonzentrator sowie Materialreservoir für zu verflüssigendes Material.

Die AFT Technologie kommt ohne Anker oder Klammern zum Befestigen der Borstenfilamente aus, die stattdessen direkt an der Trägerplatte angeschweisst werden. Damit wird die Breite eines Borstenbündels nicht durch den Anker bestimmt, so dass sich auch feinere Strukturen, insbesondere auch flächige Borstenanordnungen, realisieren lassen.

Technisch ist es auch möglich, beim AFT-Verfahren die Borstenfilamente vor dem Anbringen an die Trägerplatte für den Gebrauch vorzubereiten. Realisiert wird derzeit jedoch die Variante, bei der die Borsten erst nach dem Anbringen an die Trägerplatte bearbeitet werden.

Fig. 8a-e zeigt eine Variante zur Zahnbürste aus Fig. 4. Das Borstenfeld aus konventionellen Borstenbündeln 3 entspricht Fig. 4. Das Zusatzteil 4 hat eine Mehrzahl von sternförmig auseinandergehenden stiftförmigen Reinigungselementen 6, die durch die konventionellen Borstenbündel 3 durchgreifen (Fig. 8d, e). Der Befestigungsmechanismus entspricht Figur 4. Eine Schicht 22 aus weichelastischem Material deckt die Unterseite des Kopf- und Griffteils 1,2 ab.

Fig. 9a-f zeigen ein weiteres Beispiel für eine erfindungsgemässe Zahnbürste. Das Kopfteil 1 weist einen vorbereiteten Bereich 13 für das Trägerelement 5 des Zusatzteils 4 auf, die grösser als das Trägerelement 5 selbst ist. Der Bereich 13 ist beispielsweise ein vollständig durch das Kopfteil 1 durchgehendes Loch, vgl. Schnittzeichnungen Fig. 9b,d,e. Der Bereich 13 hat zwei seitliche Nuten 13a, deren Form an die Form zweier seitlicher Fortsätze 5b des Trägerelements 5 angepasst ist. Dieses wird in das Kopfteil 1 eingesetzt und verrastet dort. Aufgrund des Spiels des Trägerelements 5 innerhalb des Bereichs 13, das ein seitliches Verschieben und/oder eine Schwenkbewegung um die durch die Fortsätze 5b definierte Achse ermöglicht, ergibt sich eine besondere Elastizität bzw. federnde Wirkung des Zusatzteils 4. Die Rückseite des Kopfteils 1 kann wiederum mit einer Schicht aus Weichmaterial abgedeckt sein.

Fig. 10a-j zeigt ein weiteres Beispiel für eine mittels AFT hergestellte Zahnbürste. Die Figuren 10a-c entsprechen den Figuren 7a-c und zeigen jeweils die Trägerplatte 5 in verschiedenen Verfahrensstadien. Fig. 10d-f zeigen die dieselbe Trägerplatte 5 im Schnitt entlang der in Fig. 10a angedeuteten Linie I-I. Das mittig angeordnete weichelastische Element 6 ist flächig bzw. segelartig und in der Aufsicht (Fig. 10h) wellenförmig. Wie in Fig. 10e+f dargestellt, umfasst die weichelastische Struktur seitlich angeformte Bereiche 6", die im montierten Zustand (Fig. 10h) den Zahnbürstenkopf 1 seitlich begrenzen und mit der Aussenkontur des Kopfteils nahezu bündig abschliessen. Sie dienen beispielsweise als Aufprallschutz und/oder zur zusätzlichen Massage des Gaumens. Die Bereiche 6" weisen ebenfalls Löcher 21' auf zur Aufnahme von Borstenbündeln 3, die dadurch elastisch aufgehängt und beim Putzen besonders nachgiebig sind.

Das mit konventionellen Borsten 3 und der weichelastischen Struktur 6, 6', 6'' versehene Trägerelement 5 wird in eine Ausnehmung 13 im Bürstenkopf 1 eingesetzt. Der Bürstenkopf 1 ist in Fig. 10g+j ohne Trägerelement 5 sowie in Fig. 10h+i mit eingesetztem Trägerelement 5 in verschiedenen Ansichten dargestellt. An seinem seitlichen Rand weist der Bürstenkopf 1 bzw. die Ausnehmung 13 seitliche Öffnungen 25 auf, die an die zuvor an das Trägerelement 5 angespritzten seitlichen weichelastischen Bereiche 6'' angepasst sind.

Das Trägerelement 5 wird mittels Ultraschallschweissen mit dem Bürstenkopf 1 verbunden. Die Schweissfläche 26 ist gestrichelt angedeutet. Um die Verschweissung zu realisieren, weist das Trägerelement an seinem unteren Rand einen Schweissrand 26' auf, der bei der Montage auf dem Grund der Aussparung 13 aufliegt, wobei die Berührungsfläche die Schweissfläche 26 definiert. Der Schweissrand 26' schmilzt unter Ultraschalleinfluss, so dass die beiden Teile 5 und 1 miteinander verbunden werden.

Da sich gummielastisches Material nur bedingt Ultraschall schweissen lässt, wird die Schweissfläche 26 möglichst frei davon gehalten, wie z.B. bei der Zahnbürste aus Fig. 7, oder nur minimal unterbrochen, wie bei der Zahnbürste aus Fig. 10. Ziel ist in beiden Fällen die vollständige Abdichtung des Hohlraums 28 zwischen Trägerelement 5 und Kopfteil 1, um Eindringen von Wasser und Keimen zu verhindern. Bevorzugt wird dazu der Anspritzpunkt des weichelastischen Materials an der borstentragenden Vorderseite des Trägerelements 5 gewählt, damit keine unnötigen Materialbrücken die Schweissfläche 26 verkleinern. Falls weitere weichelastische Elemente am Kopfteil 1, insbesondere an dessen Rückseite, vorhanden sind, wird deren Lage so gewählt, dass sie die Schweissfläche 26 nicht verkleinern. Beispielsweise liegen sie und der entsprechende Anspritzpunkt vollständig innerhalb des durch die Schweissfläche 26 definierten Bereichs an der Rückseite des Kopfteils 1 (nicht dargestellt). Bevorzugt wird die gesamte Berührungsfläche zwischen Kopfteil 1 und Trägerelement 5 zu mindestens 25% verschweisst, besonders bevorzugt entlang des Kopfumfanges (Linie 26).

Im Beispiel aus Fig. 10 unterbrechen die weichelastischen Bereiche 6" die Schweissfläche 26, so dass dort ungeschweissten Stellen 27 entstehen. Diese sind vorteilhaft an der Seite des Kopfteils 1 angeordnet, während die in Längsrichtung vorderen und hinteren Bereiche des Trägerelements 5 mit dem Kopfteil 1 fest verschweisst sind. Dadurch wird ein sicherer Halt des Trägerelements 5 gewährleistet, da durch die Putzbewegung und entsprechende Hebelkräfte der vordere und hintere Bereich der grössten Belastung ausgesetzt ist.

Die ungeschweissten Stellen 27 werden vorliegend durch die weichelastischen Bereiche 6" nach Art einer Dichtlippe abgedichtet, so dass kein oder nur wenig Wasser in den Hohlraum 28 eindringen kann. Für eine gute Dichtfunktion wird vorzugsweise Material mit einer Shore A Härte von 50 oder weniger gewählt. Ungeschweisste Stellen zwischen Kopfteil und Trägerelement können auch gezielt eingesetzt werden, um eine gewisse Flexibilität zwischen den beiden Hartkomponenten zu erreichen.

Fig. 11 zeigt ein weiteres Beispiel für eine im AFT-Verfahren hergestellte Zahnbürste mit zwei segelartigen weichelastischen Reinigungselementen 6 in verschiedenen Ansichten. Das Trägerelement 5 ist an seiner Peripherie vollständig mit weichelastischem Material 6' umgeben, das im montierten Zustand (Aufsichtdarstellung Fig 11a) das Kopfteil 1 an seinem äusseren Umfang an der Oberseite vollständig umschliesst und als Aufprallschutz dient. In Bereichen 6" dient das Weichmaterial als Halterung für seitliche Borstenbündel 3, die durch das weichelastische Material 6" hindurchgeführt sind.

Wie aus Fig. 11c hervorgeht, berühren sich die Hartkomponenten von Trägerelement 5 und Kopfteil 1 entlang einer Fläche 26 unterhalb der Weichkomponente im Bereich 6' und können hier mittels Ultraschall verschweisst werden. Die Schweissfläche 26 ist durch die seitlichen Bereiche 6 " unterbrochen, wobei jedoch, wie oben beschrieben, eine ausreichende Haltewirkung erzielt wird. Der Hohlraum 28 unterhalb des Trägerelements 5 wird durch die weichelastischen Bereiche 6" und die entlang der Fläche 26 verschweissten Stellen abgedichtet.

Die oben mit Bezug auf Fig. 10 und 11 beschriebene Art der Verschweissung und Abdichtung der Komponenten kann mit Vorteil auch bei anderen Zahnbürsten eingesetzt werden.

## Patentansprüche

1. Zahnbürste mit einem Handgriff (2) und einem Kopfteil (1) mit Borstenfilamenten (3) und einer weichelastischen Struktur (6, 6', 22) mit wenigstens einem weichelastischen Reinigungselement (6), wobei die weichelastische Struktur (6, 6', 22) an einem aus einem Hartmaterial bestehenden Trägerelement (5) angeordnet ist, **dadurch gekennzeichnet, dass** das Trägerelement (5) mittels einer Schnapp- oder Rastverbindung am Kopfteil (1) befestigt ist, indem das Trägerelement (5) einen Fortsatz (5b, 11) und das Kopfteil (1) eine Ausnehmung (8', 13) zur Aufnahme des Fortsatzes (5b, 11) und/oder des Trägerelements (5) aufweist.

2. Zahnbürste nach Anspruch 1, **dadurch gekennzeichnet, dass** das weichelastische Reinigungselement (6) stabförmig oder flächig ist.

3. Zahnbürste nach Anspruch 1 oder 2, **dadurch gekennzeichnet, dass** der Fortsatz federnd gestaltet ist.

4. Zahnbürste nach einem der vorangegangenen Ansprüche, **dadurch gekennzeichnet, dass** der Fortsatz (11) an seinem unteren Ende (11a) einen vergrösserten Querschnitt aufweist.

5. Zahnbürste nach einem der vorangegangenen Ansprüche, **dadurch gekennzeichnet, dass** das Trägerelement (5) derart mit Spiel in die Ausnehmung (8', 13) eingesetzt ist, dass das Trägerelement (5) relativ zum Kopfteil (1) seitlich verschoben werden und/oder eine Schwenkbewegung ausführen kann.

6. Zahnbürste nach einem der vorangegangenen Ansprüche, **dadurch gekennzeichnet, dass** die Ausnehmung (8', 13) ein durch das Kopfteil (1) durchgehendes Loch ist.

7. Zahnbürste nach einem der vorangegangenen Ansprüche, **dadurch gekennzeichnet, dass** das Trägerelement (5) aus demselben Material wie das Kopfteil (1) besteht.

8. Zahnbürste nach Anspruch 1, 2 oder 3, **dadurch gekennzeichnet, dass** zwischen dem Trägerelement (5) und dem Kopfteil (1) eine unlösbare Verbindung besteht.

9. Zahnbürste nach einem der vorangegangenen Ansprüche, **dadurch gekennzeichnet, dass** die weichelastische Struktur (6, 6', 22) und das Trägerelement (5) durch ein Zwei- oder Mehrkomponentenspritzgiessverfahren hergestellt sind, wobei vorzugsweise eine unlösbare Verbindung zwischen der weichelastischen Struktur (6, 6', 22) und dem Trägerelement (5) besteht.

10. Zahnbürste nach einem der vorangegangenen Ansprüche, **dadurch gekennzeichnet, dass** das Material des Trägerelements (5) Polypropylen (PP), Styrol-Acryl-Nitril (SAN), Acryl-Nitril-Butadienstyrol (ABS), Isoplast® oder Polyester (PET) ist.

11. Zahnbürste nach einem der Ansprüche 1-10, **dadurch gekennzeichnet, dass** die Borstenfilamente (3) mit einer Borstenplatte (18) oder direkt mit dem Kopfteil (1) verbunden sind.

12. Zahnbürste nach einem der vorangegangenen Ansprüche, **dadurch gekennzeichnet, dass** die weichelastische Struktur (6, 6', 22) aus natürlichem oder synthetischem Gummi, vorzugsweise aus einem thermoplastischen Elastomer, besteht, das bevorzugt eine Shore A Härte von weniger als 90, besonders bevorzugt von weniger als 50 hat..

13. Zahnbürste nach einem der vorangegangenen Ansprüche, **dadurch gekennzeichnet, dass** Verbindungsstellen zwischen dem Kopfteil (1) und dem Trägerelement (5) durch weichelastisches Material (22) abgedeckt sind.

14. Zahnbürste nach einem der vorangegangenen Ansprüche, **dadurch gekennzeichnet, dass** der Kopfteil (1) eine Ausnehmung (13) aufweist, in welcher das Trägerelement (5) derart eingesetzt ist, dass es innerhalb der Ausnehmung (13) beweglich ist.

15. Verfahren zur Herstellung einer Zahnbürste nach einem der vorangegangenen Ansprüche, bei welchem ein aus einem Hartmaterial bestehendes Trägerelement (5) mit einem Fortsatz (5b, 11) hergestellt, eine weichelastische Struktur (6, 6', 22) mit wenigstens einem weichelastischen Reinigungselement (6) am Trägerelement (5) befestigt sowie ein Handgriff (2) und ein Kopfteil (1) mit eine Ausnehmung (8', 13) zur Aufnahme des Fortsatzes (5b, 11) hergestellt wird, wobei das Trägerelement (5) mittels einer Schnapp- oder Rastverbindung am Kopfteil (1) befestigt wird, indem der Fortsatz (5b, 11) des Trägerelements (5) und/oder das Trägerelement (5) selbst in die Ausnehmung (8', 13) eingesetzt wird.

16. Verfahren nach Anspruch 15,**dadurch gekennzeichnet, dass** das Trägerelement (5) derart in die Ausnehmung (8', 13) eingesetzt wird, dass es innerhalb dieser beweglich ist.

17. Verfahren nach Anspruch 15 oder 16, **dadurch gekennzeichnet, dass** das Trägerelement (5) und das Kopfteil (1) unlösbar miteinander verbunden werden, vorzugsweise durch Verklemmen, Verschnappen, Nieten, Kleben, Schweissen, Ultraschallschweissen oder Wärmezufuhr.

18. Verfahren nach Anspruch 15, 16 oder 17, **dadurch gekennzeichnet, dass** die Borstenfilamente (3) am Kopfteil (1) oder einer Borstenplatte (18) befestigt werden und vor dem Befestigen des Trägerelements (5) geschnitten und/oder abgerundet und/oder auf andere Weise gebrauchsfertig gemacht werden.

19. Verfahren nach einem der Ansprüche 15-18, **dadurch gekennzeichnet, dass** die weichelastische Struktur (6, 6', 22) und das Trägerelement (5) im Zweikomponentenspritzgiessverfahren hergestellt und anschliessend mit dem Kopfteil (1) verbunden werden, wobei vorzugsweise eine unlösbare Verbindung zwischen der weichelastischen Struktur (6, 6', 22) und dem Trägerelement (5) hergestellt wird.

20. Verfahren nach einem der Ansprüche 15-19, **dadurch gekennzeichnet, dass** das Trägerelement (5) mit der weichelastischen Struktur (6, 6', 22) versehen wird, das Kopfteil (1) vor Anbringen des Trägelements (5) mit konventionellen Borstenbündeln (3) bestückt wird, die Borstenbündel (3) bearbeitet werden und anschliessend das Trägerelement (5) mit dem Kopfteil (1) verbunden wird.

## Claims

1. Toothbrush having a handle (2) and a head part (1) with bristle filaments (3) and a flexible structure (6, 6', 22), having at least one flexible cleaning element (6), the flexible structure (6, 6', 22) being arranged on a carrier element (5) which consists of a hard material, **characterized in that** the carrier element (5) is fastened on the head part (1) by means of a snap-fitting or latching connection, **in that** the carrier element (5) has an extension (5b, 11) and the head part (1) has a cutout (8', 13) for receiving the extension (5b, 11) and/or the carrier element (5).

2. Toothbrush according to Claim 1, **characterized in that** the flexible cleaning element (6) is rod-like or sheet-like.

3. Toothbrush according to Claim 1 or 2, **characterized in that** the extension is of a resilient configuration.

4. Toothbrush according to one of the preceding claims, **characterized in that** the extension (11) has an enlarged cross section at its lower end (11a).

5. Toothbrush according to one of the preceding claims, **characterized in that** the carrier element (5) is inserted in the cutout (8', 13) with play in such a way that the carrier element (5) is laterally displaceable in relation to the head part (1) and/or can perform a pivoting movement.

6. Toothbrush according to one of the preceding claims, **characterized in that** the cutout (8', 13) is a hole passing all the way through the head part (1).

7. Toothbrush according to one of the preceding claims, **characterized in that** the carrier element (5) consists of the same material as the head part (1).

8. Toothbrush according to Claim 1, 2 or 3, **characterized in that** a non-releasable connection is provided between the carrier element (5) and head part (1).

9. Toothbrush according to one of the preceding claims, **characterized in that** the flexible structure (6, 6', 22) and the carrier element (5) are produced by two-component or multi-component injection moulding, a non-releasable connection preferably being provided between the flexible structure (6, 6', 22) and the carrier element (5).

10. Toothbrush according to one of the preceding claims, **characterized in that** the material of the carrier element (5) is polypropylene (PP), styrene-acrylonitrile (SAN), acrylonitrile-butadiene-styrene (ABS), Isoplast® or polyester (PET).

11. Toothbrush according to one of Claims 1-10, **characterized in that** the bristle filaments (3) are connected to a bristle plate (18) or directly to the head part (1).

12. Toothbrush according to one of the preceding claims, **characterized in that** the flexible structure (6, 6', 22) consists of natural or synthetic rubber, preferably of a thermoplastic elastomer, which preferably has a Shore A hardness of less than 90, particularly preferably of less than 50.

13. Toothbrush according to one of the preceding claims, **characterized in that** connecting locations between the head part (1) and the carrier element (5) are covered by flexible material (22).

14. Toothbrush according to one of the preceding claims, **characterized in that** the head part (1) has a cutout (13), in which the carrier element (5) is inserted such that it can be moved within the cutout (13).

15. Process for producing a toothbrush according to one of the preceding claims, in which a carrier element (5) consisting of a hard material and with an extension (5b, 11) is produced, a flexible structure (6, 6', 22) having at least one flexible cleaning element (6) being fastened on the carrier element (5) and a handle (2) and a head part (1) with a cutout (8', 13) for receiving the extension (5b, 11) being produced, the carrier element (5) being fastened on the head part (1) by means of a snap-fitting or latching connection, in that the extension (5b, 11) of the carrier element (5) and/or the carrier element (5) itself is inserted into the cutout (8', 13).

16. Process according to Claim 15, **characterized in that** the carrier element (5) is inserted into the cutout (8', 13) in such a way that it is movable within the latter.

17. Process according to Claim 15 or 16, **characterized in that** the carrier element (5) and the head part (1) are connected to one another in a non-releasable manner, preferably by clamping, snap-fitting, riveting, adhesive bonding, welding, ultrasonic welding or the supply of heat.

18. Process according to Claim 15, 16 or 17, **characterized in that** the bristle filaments (3) are fastened on the head part (1) or a bristle plate (18) and are cut and/or rounded and/or prepared for use in some other way before the carrier element (5) is fastened.

19. Process according to one of Claims 15-18, **characterized in that** the flexible structure (6, 6', 22) and the carrier element (5) are produced by two-component injection moulding and then connected to the head part (1), a non-releasable connection preferably being produced between the flexible structure (6, 6', 22) and the carrier element (5).

20. Process according to one of Claims 15-19, **characterized in that** the carrier element (5) is provided with the flexible structure (6, 6', 22), the head part (1) is provided with conventional clusters of bristles (3) before the carrier element (5) is fitted, the clusters of bristles (3) are machined and then the carrier element (5) is connected to the head part (1).

## Revendications

1. Brosse à dents présentant un manche (2) et une partie tête (1) comportant des filaments de soies (3) et une structure élastique souple (6, 6', 22) comportant au moins un élément de nettoyage élastique souple (6), dans laquelle la structure élastique souple (6, 6', 22) est disposée sur un élément de support (5) constitué de matériau dur, **caractérisée en ce que** l'élément de support (5) est fixé à la partie tête (1) au moyen d'une liaison par enclenchement ou par encliquetage dans la mesure où l'élément de support (5) comporte un prolongement (5b, 11) et la partie tête (1) un évidement (8', 13) pour recevoir le prolongement (5b, 11) et/ou l'élément de support (5).

2. Brosse à dents selon la revendication 1, **caractérisée en ce que** l'élément de nettoyage élastique souple (6) est en forme de tige ou plat.

3. Brosse à dents selon la revendication 1 ou 2, **caractérisée en ce que** le prolongement est réalisé de manière élastique.

4. Brosse à dents selon l'une des revendications précédentes, **caractérisée en ce que** le prolongement (11) présente une section transversale agrandie à son extrémité inférieure (11a).

5. Brosse à dents selon l'une des revendications précédentes, **caractérisée en ce que** l'élément de support (5) est placé avec du jeu dans l'évidement (8', 13), de telle manière que l'élément de support (5) peut être décalé latéralement par rapport à la partie tête (1) et/ou exécuter un mouvement de pivotement.

6. Brosse à dents selon l'une des revendications précédentes, **caractérisée en ce que** l'évidement (8', 13) est un trou traversant la partie tête (1).

7. Brosse à dents selon l'une des revendications précédentes, **caractérisée en ce que** l'élément de support (5) est constitué du même matériau que la partie tête (1).

8. Brosse à dents selon la revendication 1, 2 ou 3, **caractérisée en ce qu'**il existe une liaison inamovible entre l'élément de support (5) et la partie tête (1).

9. Brosse à dents selon l'une des revendications précédentes, **caractérisée en ce que** la structure élastique souple (6, 6', 22) et l'élément de support (5) sont fabriqués par un procédé de moulage par injection de deux ou plusieurs composants, une liaison de préférence inamovible existant entre la structure élastique souple (6, 6', 22) et l'élément de support (5) .

10. Brosse à dents selon l'une des revendications précédentes, **caractérisée en ce que** le matériau de l'élément de support (5) est du polypropylène (PP), du styrène-acrylonitrile (SAN), de l'acrylonitrile-butadiène-styrène (ABS), de l'Isoplast® ou du polyester (PET).

11. Brosse à dents selon l'une des revendications 1 à 10, **caractérisée en ce que** les filaments de soies (3) sont reliés à une plaque pour soies (18) ou directement à la partie tête (1).

12. Brosse à dents selon l'une des revendications précédentes, **caractérisée en ce que** la structure élastique souple (6, 6', 22) est constituée de caoutchouc naturel ou synthétique, de préférence d'un élastomère thermoplastique, qui a de préférence une dureté Shore inférieure à 90, de manière particulièrement préférée de moins de 50.

13. Brosse à dents selon l'une des revendications précédentes, **caractérisée en ce que** des endroits de liaison entre la partie tête (1) et l'élément de support (5) sont recouverts de matériau élastique souple (22).

14. Brosse à dents selon l'une des revendications précédentes, **caractérisée en ce que** la partie tête (1) présente un évidement (13) dans lequel l'élément de support (5) est inséré de telle façon qu'il est mobile à l'intérieur de l'évidement (13).

15. Procédé de fabrication d'une brosse à dents selon l'une des revendications précédentes, dans lequel un élément de support (5) constitué d'un matériau dur est fabriqué avec un prolongement (5b, 11), une structure élastique souple (6, 6', 22) comportant au moins un élément de nettoyage élastique souple (6) est fixée à l'élément de support (5), ainsi qu'un manche (2) et une partie tête (1) avec un évidement (8', 13) pour recevoir le prolongement (5b, 11) sont fabriqués, l'élément de support (5) étant fixé à la partie tête (1) au moyen d'une liaison par enclenchement ou par encliquetage, dans la mesure où prolongement (5b, 11) de l'élément de support (5) et/ou l'élément de support (5) lui-même est placé dans l'évidement (8', 13).

16. Procédé selon la revendication 15, **caractérisé en ce que** l'élément de support (5) est placé dans l'évidement (8', 13) de telle façon qu'il est mobile à l'intérieur de celui-ci.

17. Procédé selon la revendication 15 ou 16, **caractérisé en ce que** l'élément de support (5) et la partie tête (1) sont reliés l'un à l'autre de manière inamovible, de préférence par blocage, enclenchement, rivetage, collage, soudage, soudage par ultrasons ou apport de chaleur.

18. Procédé selon la revendication 15, 16 ou 17, **caractérisé en ce que** les filaments de soies (3) sont fixés à la partie tête (1) ou à une plaque pour soies (18) et sont coupés et/ou arrondis ou rendus utilisables d'une autre manière avant la fixation de l'élément de support (5).

19. Procédé selon l'une des revendications 15 à 18, **caractérisé en ce que** la structure élastique souple (6, 6', 22) et l'élément de support (5) sont fabriqués par moulage par injection de deux composants et sont ensuite assemblés à la partie tête (1), une liaison de préférence inamovible existant entre la structure élastique souple (6, 6', 22) et l'élément de support (5).

20. Procédé selon l'une des revendications 15 à 19, **caractérisé en ce que** l'élément de support (5) est pourvu de la structure élastique souple (6, 6', 22), la partie tête (1) est équipée de touffes de soies (3) classiques avant le montage de l'élément de support (5), les touffes de soies (3) sont travaillées et ensuite l'élément de support (3) est relié à la partie tête (1).
